# EUROPÄISCHE PATENTSCHRIFT

(11) **EP 2 662 240 B1**
(45) Veröffentlichungstag und Bekanntmachung des Hinweises auf die Patenterteilung: **25.09.2019**
(21) Anmeldenummer: 13002455.7
(22) Anmeldetag: 08.05.2013
(51) Int. Cl.: B60P 1/02

(54) **FAHRZEUGAUFBAU FÜR NUTZFAHRZEUGE**
VEHICLE BODY FOR UTILITY VEHICLES
MONTAGE DE VÉHICULE POUR VÉHICULES UTILITAIRES

(30) Priorität: 09.05.2012 DE 102012009074
(43) Veröffentlichungstag der Anmeldung: 13.11.2013
(73) Patentinhaber: Fahrzeugwerk Bernard Krone GmbH, 48480 Spelle (DE)
(72) Erfinder: Singer, Mario, 49832 Freren (DE)
(74) Vertreter: Pott, Ulrich

(56) Entgegenhaltungen:
- DE-A1-102009 032 565
- DE-U1- 20 319 595
- FR-A1- 2 918 322
- GB-B- 2 395 694

## Beschreibung

Die Erfindung bezieht sich auf einen Fahrzeugaufbau für Nutzfahrzeuge mit einem auf einem Fahrgestell gehalterten Laderaumboden sowie mit Eck- und Seitenrungen, die mit einem Fahrzeugdach verbunden sind und von denen zumindest ein Rungenteil mit in unterschiedlichen Höhen angeordneten Stützansätzen versehen ist zur Halterung eines Stützauslegers eines zusätzlich zum Laderaumboden vorzusehenden Segmentbodens zur Aufnahme von Transportgut, wobei ein Stützausleger derart beweglich in oder am Segmentboden befestigt ist, dass er in seiner Stützbetriebsstellung eine dem zugeordneten Stützansatz zugewandte Seitenkante des Segmentbodens überragt und in einer nicht abstützenden Außerbetriebsstellung in einen Bereich der Flächenerstreckung des Segmentbodens überführbar ist, in der er die dem Stützansatz zugewandte Seitenkante des Segmentbodens nicht oder nicht wesentlich überragt, wobei der Stützausleger mit einer Schwenkachse versehen ist, aufgrund deren Lage der Stützausleger in einer nicht verriegelten Stellung infolge von Eigengewicht in eine innerhalb des Segmentbodens gelegene Betriebsstellung fällt, in der ein Bereich des Stützauflegers die Seitenkante des Segmentbodens überragt.

Fahrzeugaufbauten für Nutzfahrzeuge werden in aller Regel mit einem auf dem Fahrgestell abgestützten Laderaumboden versehen ist, der mit dem Transportgut beispielsweise von der Seite her beladen werden kann. Ein Großteil der zu befördernden Ladegüter hat jedoch nur eine Transporthöhe von nicht mehr als 1,5 m, so dass aufgrund der wesentlich größeren maximal zulässigen Laderaumhöhe ein Teil der Laderaumkapazität eines derartigen Fahrzeugaufbaus während des Transportes ungenutzt bleibt. Die Bodenplatzkapazität bei Standardnutzfahrzeugaufbauten ist jedoch auf eine Stellplatzkapazität für Paletten begrenzt. Bei herkömmlichen Standardfahrzeugaufbauten können in aller Regel 33 Palettenstellplätze zur Verfügung gestellt werden. Die Auslastung des Laderaumvolumens und damit die Wirtschaftlichkeit eines derartigen Fahrzeugaufbaus ist daher nicht optimal.

Es ist vorgeschlagen worden, die zur Verfügung zu stellenden Stellplätze im Fahrzeugaufbau flexibler zu gestalten, und eine Stellplatzkapazität nicht nur auf dem Laderaumboden zur Verfügung stellen zu können, sondern zusätzliche Segmentböden zu platzieren, die über Stützausleger an in unterschiedlichen Höhenanlagen vorgesehenen Stützansätzen von Eck- und Seitenrungen des Fahrzeugaufbaus abzustützen sind. Diese können in der Höhe wählbar oberhalb des auf dem Laderaum platzierten Teilladegutes für die Aufnahme weiterer Ladegüter platziert werden. Wenn auf dem Laderaumboden abzustellende Ladegüter mit einer größeren Höhe zu transportieren sind, kann die Höhe des zusätzlichen Segmentbodens dieser Höhe angepasst oder aber es können diese weggenommen werden. Damit ist der Laderaum wesentlich flexibler zu nutzen.

Derartige Anordnungen mit zusätzlichen Segmentböden sind beispielsweise aus der GB 2395694 B und GB 2395695 B bekannt. Bei der GB 2395694 B sind die Rungen um eine vertikale Achse zu verschwenken, damit die Runge mit ihren Stützansätzen den Zugang zu dem Raum auf die Ladefläche vergrößert. Dadurch ist auch der Segmentboden in der Höhe verschiebbar an der Runge vorbei zu bewegen, und zwar auch an Stützansätzen der Runge vorbei. Der damit einhergehende Aufwand ist jedoch erheblich und wirkt sich nachteilig auf die aufzunehmende Stützlast aus.

Bei der Lösung nach der GB 2 395 694 B sind bei einer Lösungsvariante die Stützansätze relativ zu der ihnen zugeordneten Runge zu bewegen, um dem Segmentboden im Falle einer Höhenanpassung an diesen Stützansätzen vorbeibewegen zu können. In der den Segmentboden abstützenden Betriebsstellung sind die Stützansätze zu verriegeln. Bei einer anderen Lösungsvariante sind in Seitenprofilen eines Segmentbodens, die nach unten hin offen sind, Stützausleger schwenkbar angeordnet, die an Stützansätzen der Rungen infolge ihrer einwärts gerichteten Verschwenkung während eines Anhebevorganges des Segmentboden vorbei bewegt werden können. Hat der Segmentboden den Stützansatz der Runge passiert, verbleiben die Stützausleger jedoch in ihrer einwärts verschwenkten Stellung und müssen von einer Bedienperson wieder mittels Werkzeugen aus diesen herausbewegt werden.

Es ist Aufgabe der vorliegenden Erfindung, einen Fahrzeugaufbau für Nutzfahrzeuge der eingangs genannten Art derart weiter zu bilden, dass die Stützausleger und die Rungen in der Lage sind, hohe Stützlasten aufzunehmen, gleichwohl es ermöglicht ist, dass ein Segmentboden in baulich einfacher Art bei einer vorzunehmenden Höhenveränderung an den Stützansätzen einer Runge vorbeizubewegen ist.

Zur Lösung dieser Aufgabe zeichnet sich der Fahrzeugaufbau für Nutzfahrzeuge der eingangs genannten Art dadurch aus, dass die Position des Stützauslegers durch eine Anzeigevorrichtung angezeigt ist, wobei der Stützausleger mit einem Signalfahnenbereich ausgebildet ist, der anzeigt, ob sich der Stützausleger in seiner abstützenden Betriebsstellung oder sich in einer nicht-abstützenden Außerbetriebsstellung befindet.

Damit ist ein Fahrzeugaufbau zur Verfügung gestellt, bei der Stützausleger des höhenveränderlich anzuordnenden Segmentbodens beweglich ausgebildet ist und im Falle einer Höhenveränderung des Segmentbodens in eine derart zurückgeführte Lage überführt wird, dass er an den ortsfest vorgesehenen Stützansätzen der ebenfalls ortsfest vorzusehenden Eck- oder Seitenrunge vorbeibewegt wird. Der Stützausleger des Segmentbodens kann daher während einer Höhenbewegung des Segmentbodens freibewegbar ausgebildet sein, so dass er an der Seitenfläche der Runge und des Stützauslegers entlangbewegt werden kann und der Geometrie der Runge und des Stützansatzes folgt, indem sich seine vordere Lage verändert. Dies erfolgt dadurch, dass der Stützausleger um eine Schwenkachse schwenkbar ist.

Nach Überwinden beispielsweise eines Stützansatzes wird der Stützausleger, ggf. nach Entriegelung, in eine Position überführt wird, wonach er bei einer nachfolgenden Absenkbewegung in seiner Stützbetriebsstellung gelegen ist und nach Auftreffen auf eine Stützfläche eines Stützansatzes automatisch seine Stützposition und damit seine Betriebsstellung eingenommen hat. In dieser Betriebsstellung kann er sich an einer Stützfläche innerhalb des Segmentbodens andererseits abstützen, so dass hohe Stützlasten aufgenommen werden können, da die Eck- oder Seitenrunge mitsamt den jeweiligen Stützansätzen für hohe Stützlasten bereits werksseitig ausgelegt werden können, ohne dass es auf irgendwelche Verriegelungsmechanismen an den Stützansätzen ankommt. Diese Stützposition und damit diese Betriebsstellung wird für den Benutzer sichtbar durch die Anzeigevorrichtung mit dem Signalfahnenbereich angezeigt.

Ist der Stützausleger in seiner nicht den Segmentboden abstützenden Außerbetriebsstellung zu bewegen, befindet er sich in einem Bereich der Flächenerstreckung des Segmentbodens derart, dass er die dem Stützansatz zugewandte Seitenkante des Segmentbodens nicht überragt bzw. nicht wesentlich überragt. Mit nicht wesentlich überragt ist dabei gemeint, dass der Stützausleger den Segmentboden auch geringfügig überragen kann, also dessen Flächenerstreckung, aber nur so weit, dass bei einer Auf- und Abbewegung des Segmentbodens der Stützausleger den Stützansatz passieren kann.

In dieser den Segmentboden nicht abstützenden Außerbetriebsstellung kann der Stützausleger verriegelt werden, so dass er auch nicht infolge Eigengewicht oder infolge einer Federkraft aus dieser Lage wegbewegt werden kann, um so eine freie Auf- und Abbeweglichkeit des Segmentbodens nicht zu behindern. Dabei kann der Stützausleger so am Segmentboden befestigt sein, dass er nur in seiner Nicht abstützenden Außerbetriebsstellung verriegelt ist und in eine von der einwärts verschwenkten Außerbetriebsstellung andere Stellung frei beweglich ist, beispielsweise frei um seine Schwenkachse schwenkbar ist. Dazu hat die Schwenkachse eine derartige Lage, dass der Stützausleger in seiner nicht verriegelten Position infolge Eigengewicht in seine einwärts verschwenkte Außerbetriebsstellung überführt wird, in der jedoch die Bereiche des Stützauslegers, die auf den Stützansätzen der Rungen aufliegen, die Seitenkanten des Segmentbodens überragen.

Die Rungen können darüber hinaus Rungenausleger haben, die relativ zu den Stützansätzen einer Runge höhenbeweglich sind, so dass zum Einsetzen eines Segmentbodens und zum Beladen eines Segmentbodens das Fahrzeugdach angehoben werden kann, um den Laderaum zum Beladen optimal zu nutzen, beispielsweise auch in einem Bereich, der seitlich und nach hinten hin von einem Aussenbaum begrenzt ist.

Zur Verriegelung des Stützauslegers des Segmentbodens kann ein Verriegelungshebel vorgesehen sein, der in einer Führungskulisse geführt ist, mit jeweiligen endseitigen Anschlägen.

Weitere vorteilhafte Ausgestaltungen ergeben sich aus weiteren Unteransprüchen, der nachfolgenden Beschreibung und der Zeichnung. In der Zeichnung zeigen:
- Fig. 1: ein Ausführungsbeispiel eines Fahrzeugaufbaus nach der Erfindung in einer perspektivischen schematischen Seitenansicht;
- Fig. 2: ausschnittsweise ein Ausführungsbeispiel eines Laderaumbodens des Fahrzeugaufbaus nach Fig. 1 mit einer ortsfesten und feststehenden Seitenrunge;
- Fig. 3, 4, 5, 6 und 7: das Hochfahren eines Segmentbodens mit entriegeltem Stützausleger jeweils einer schematischen Querschnittsdarstellung;
- Fig. 8: eine zu den Fig. 3 und 4 analoge Darstellung mit auf einen Stützansatz abgesenktem Stützausleger;
- Fig. 9, 10, 11, 12, 13, 14, 15: das Absenken des Segmentbodens in nachfolgenden Positionen mit zunächst verriegeltem Stützausleger;
- Fig. 16 bis 19: ein Ausführungsbeispiel einer Verriegelung für den Stützausleger in verschiedenen Verriegelungs- bzw. Entriegelungspositionen.

In den Figuren sind grundsätzlich gleichwirkende Teile mit übereinstimmenden Bezugsziffern versehen.

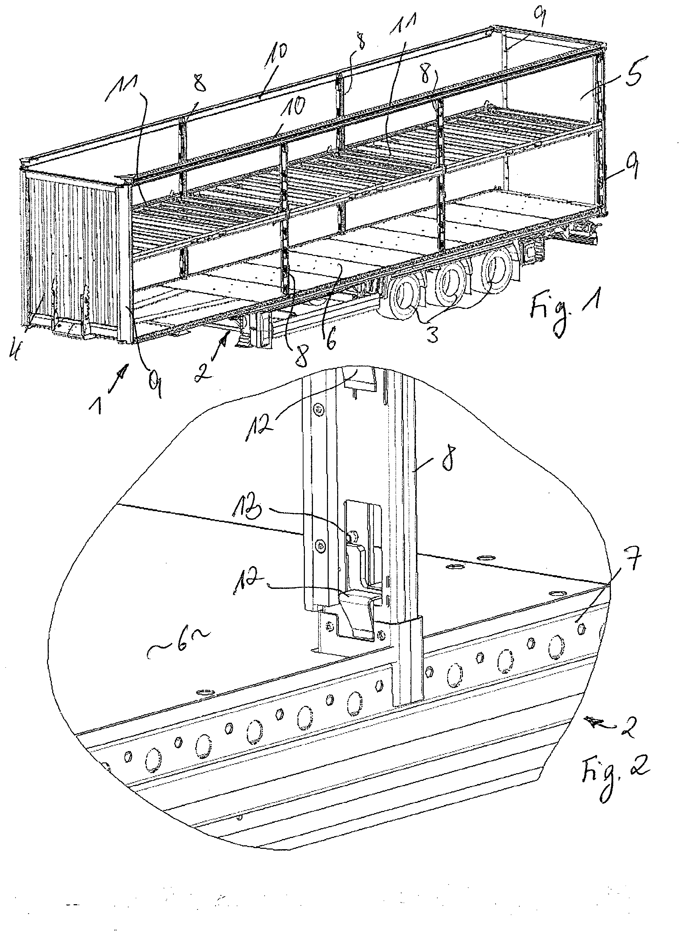

In Fig. 1 ist mit 1 ein Fahrzeugaufbau 1 beziffert mit einem Fahrgestell 2, das über Räder 3 auf den Erdboden abgestützt ist. Der Fahrzeugaufbau 1 hat eine Vorderwand 4 sowie eine vorzugsweise Flügeltüren aufweisende Rückwand 5 und einen Laderaumboden 6, der auf dem Fahrgestell 2 abgestützt ist. An den Laderaumboden 6 begrenzenden Fahrgestellleisten 7 sind Seitenrungen 8 sowie Eckrungen 9 festgelegt, an dem Außenbäume 10 zur Abstützung des nicht im einzelnen dargestellten Fahrzeugdaches festgelegt werden können. Um das Dach anzuheben, können die entsprechenden Rungen 8 und 9 höhenverstellbare Rungenausleger aufweisen, die es ermöglichen, das Fahrzeugdach z.B. an eine maximal zulässige Laderaumhöhe anzupassen aber auch an die erforderliche Beladungshöhe zur optimalen Beladung des Laderaumes des Fahrzeugaufbaus 1 anzuheben. In dem dargestellten Ausführungsbeispiel des Fahrzeugaufbaus 1 ist nicht nur der Laderaumboden 6 mit Ladegütern zu versehen. Vielmehr sind an den Rungen 8 und 9 auch noch weiteren Segmentböden 11 abzustützen, und zwar mit einem entsprechenden variablen Höhenabstand zum Laderaumboden 6, so dass auch noch in dieser Höhe weitere Ladegüter oberhalb der auf dem Laderaumboden 6 platzierten Ladegüter anzuordnen sind.

Fig. 2 verdeutlicht vergrößert die Befestigung einer Seitenrunge (Mittelrunge) 8 an der dem Laderaumboden 6 begrenzenden Fahrgestellleiste 7. Hier kann es sich um eine sog. Multilockleiste der Anmelderin handeln. Die entsprechende Seitenrunge 8 ist ortsfest und feststehend an der Multilockleiste 7 befestigt. Diese Mittelrunge hat Stützansätze 12, die sich in und gegen die Fahrtrichtung des Fahrzeugaufbaus 1 erstrecken und mithin auf die jeweils benachbarte Runge 8 bzw. 9 ausgerichtet sind.

Wie im Einzelnen noch näher erläutert werden wird, bilden diese Stützansätze 12 Stützflächen und Aufnahme für Stützausleger 14 der Segmentböden 11. Den jeweiligen Stützansätzen 12 sind Ausnehmungen 13 zugeordnet, in die die entsprechenden Stützausleger 14 ragen können.

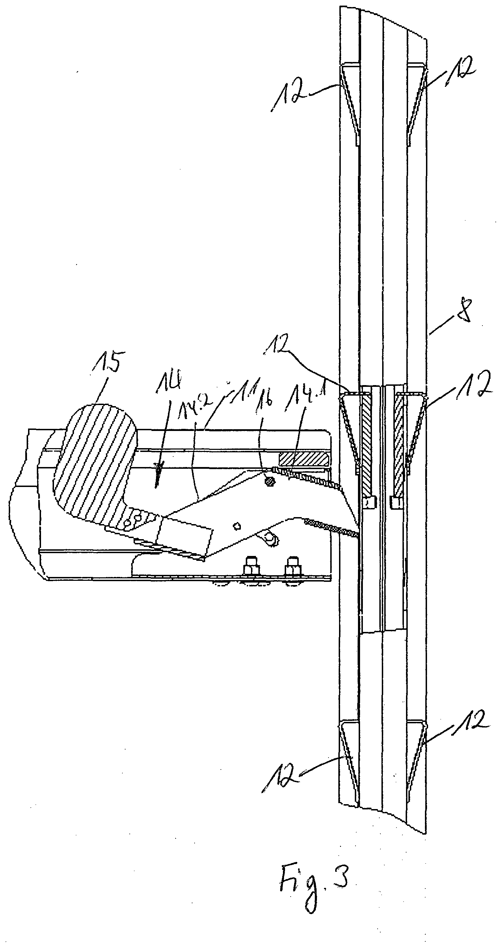

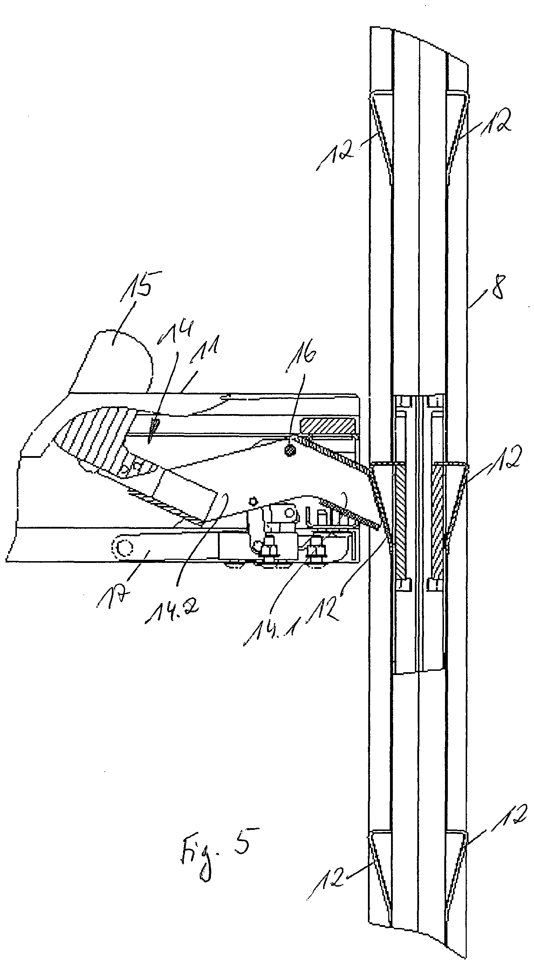

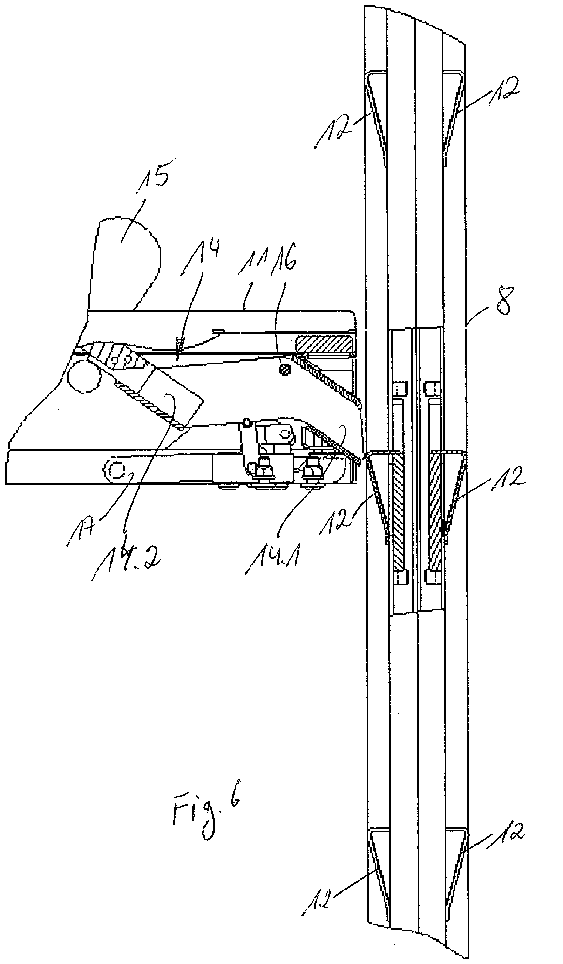

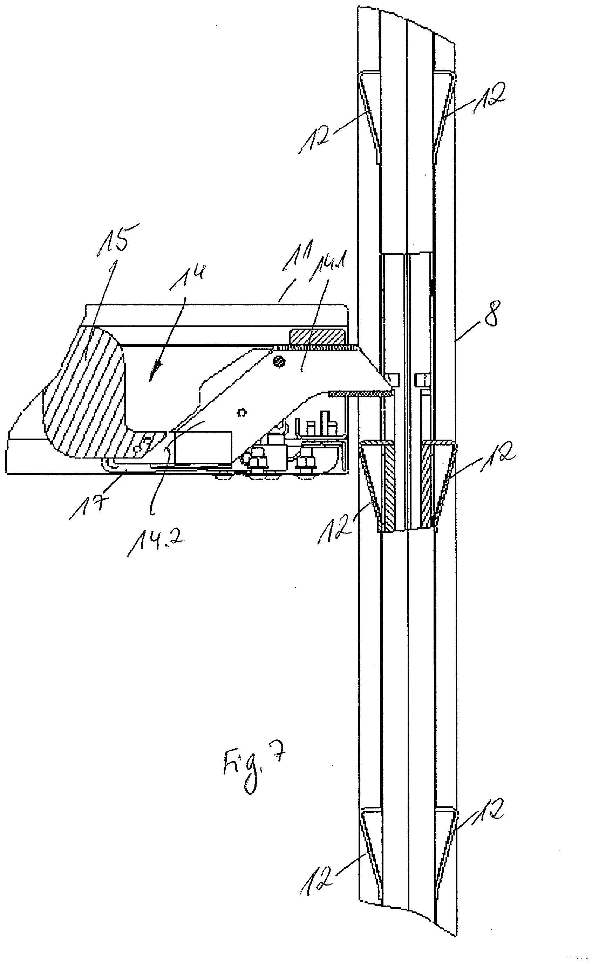

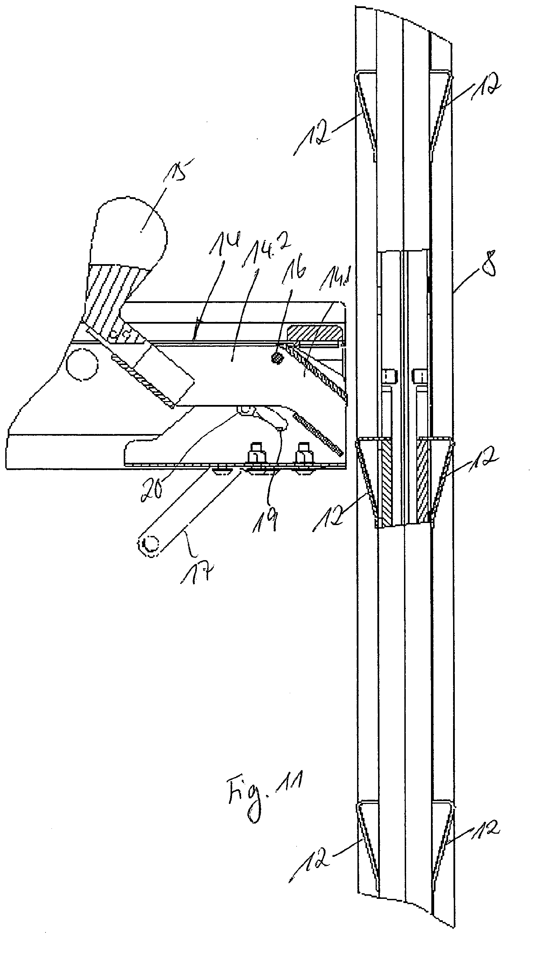

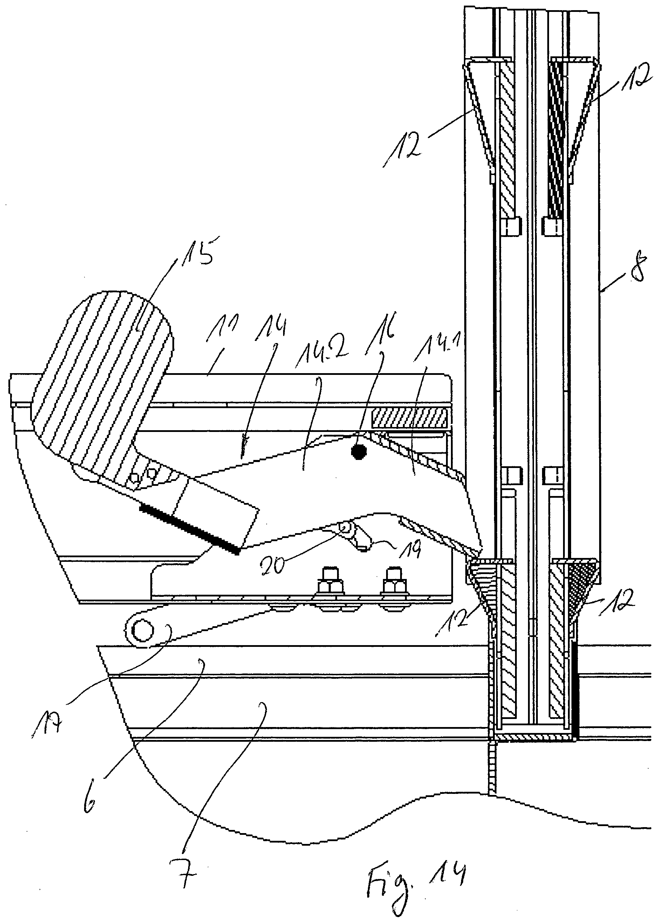

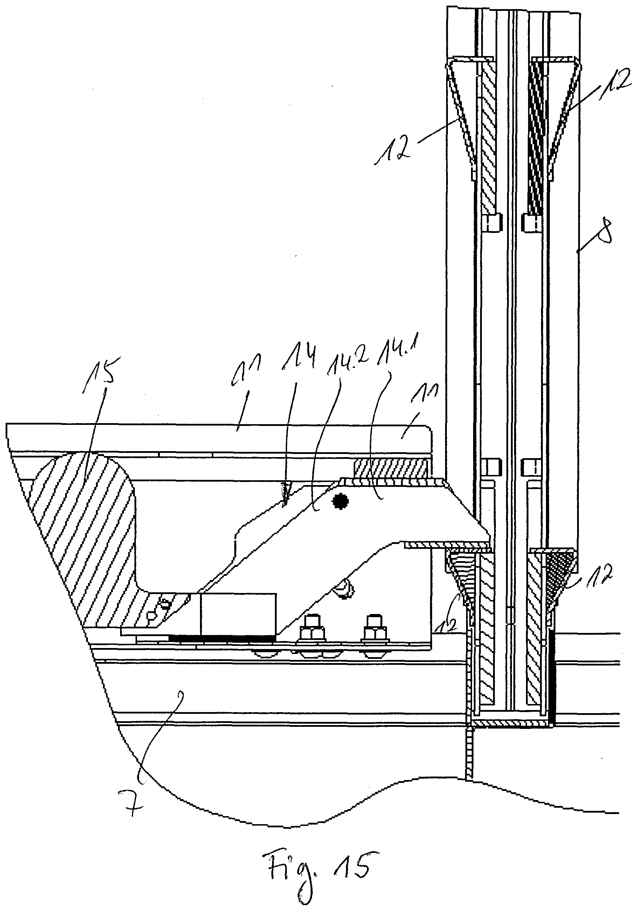

In den Fig. 3, 4, 5, 6, 7 und 8 ist ein Zustand dargestellt, in dem ein Segmentboden 11 hochgefahren werden soll. In den zeichnerischen Darstellungen nach den Fig. 3 bis 15 ist jeweils ein allgemein mit 14 bezifferter Stützausleger dargestellt, der in einem Raum innerhalb des Segmentbodens 11 angeordnet ist. Dieser Stützausleger 14 ist als Schwenkriegel mit abgewinkelten Riegelbereichen 14.1 und 14.2 ausgebildet und trägt an einem Ende einen Signalfahnenbereich 15, der eine entsprechenden Ausnehmung in der Oberfläche des Segmentbodens 11 durchsetzen kann, um einer Bedienperson anzuzeigen, in welcher Position sich der Stützausleger 14 befindet, als auch in einer Position, wo er den Segmentboden abstützt (Fig. 15) und er versenkt in dem Raum innerhalb des Segmentbodens 1 gelegen ist, so dass der Signalfahnenbereich 15 sich auch innerhalb dieses Raumes des Segmentbodens 11 befindet.

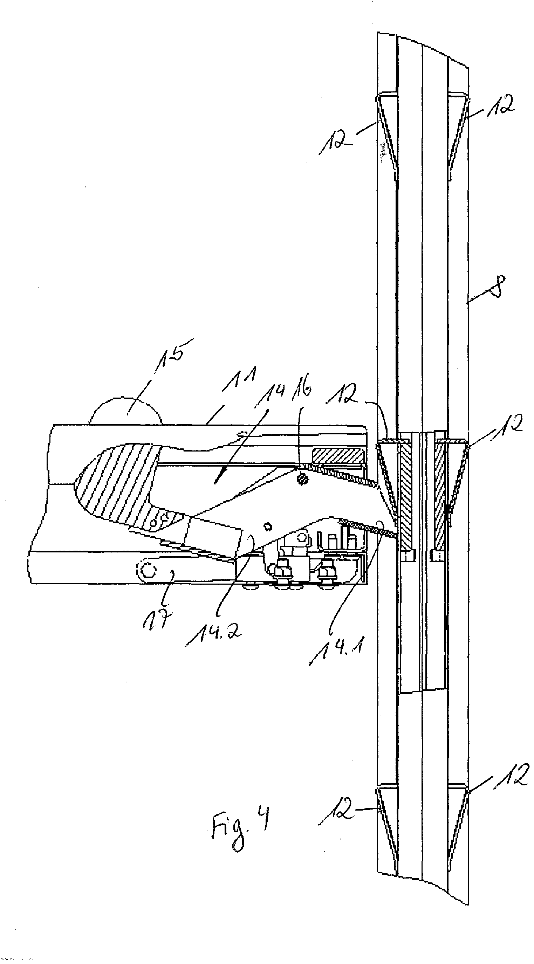

Der an der Runge 8 vorgesehene Stützansatz 12 hat eine keilförmige Gestalt und eine sich zum Fahrzeugdach, d.h. also nach oben hin ausgerichtete erweiterte Gestaltung. Von dort aus geht es in den ebenen Stützbereich über, der sich bis zu einem inneren Bereich der Runge 8 erstreckt. Der Stützausleger 14 ist um die Schwenkachse 16 verschwenkbar. In dieser Lage des Riegels wird er aus der Fig. 3 ersichtlichen Position in die gemäß Fig. 4 ersichtliche Position angehoben, wo er sich direkt unterhalb des Stützansatzes 12 befindet. Danach gleitet er frei schwenkbar an der sich nach oben erweiterten Fläche des Stützansatzes 12 ab und schwenkt mit seinem Bereich 14.1 um die Schwenkachse 16 nach unten, wobei sich der Signalfahnenbereich 15 für den Benutzer sichtbar weiter aus der Oberfläche des Segmentbodens 11 herausbewegt.

Überfährt er die seitliche Übergangskante zwischen der Schrägfläche und der ebenen Stützfläche des Stützansatzes 12, fällt er infolge Eigengewicht und nach entsprechende Verschwenkung um die Schwenkachse 16 in eine Stellung, in der der Signalfahnenbereich 15 innerhalb des Segmentbodens gelegen ist und der Bereich 14.1 des Stützauslegers 14 in einer im wesentlichen Horizontallage gelegen ist, so dass das danach der Segmentboden 11 abgesenkt werden kann und sich der Stützausleger 14 in seiner den Segmentboden 11 abstützenden Betriebsstellung befindet. Dabei stützt er sich an Bauteilen des Segmentbodens 11 und an der Stützfläche des Stützabsatzes 12 ab, ohne dass es irgendwelcher Verriegelungen bedarf. Somit sind über die ortsfesten Stützansätze 12, die Mittelrunge 8 und den Stützausleger 14 insgesamdt der Segmentboden 11 herhebliche Stützlasten bei geringem Bauaufwand der Teile zu realisieren.

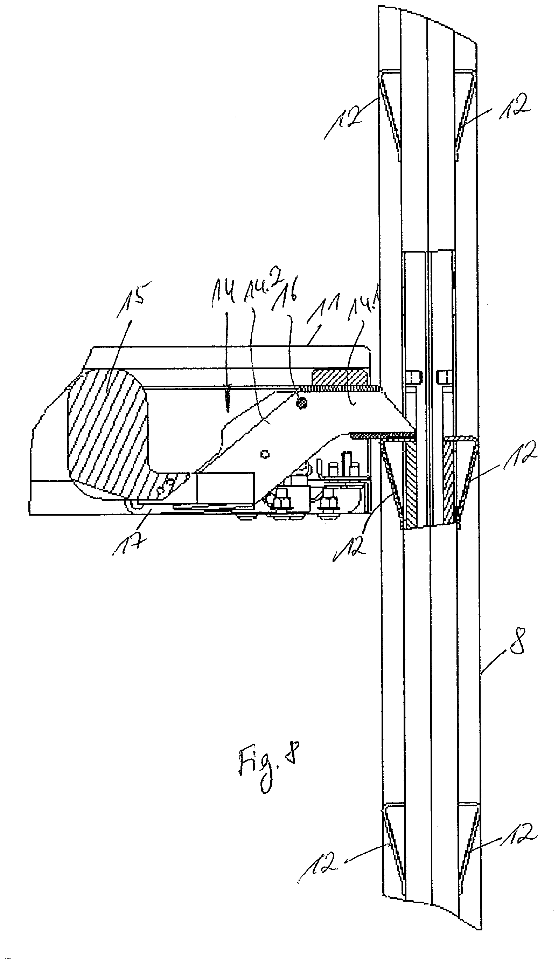

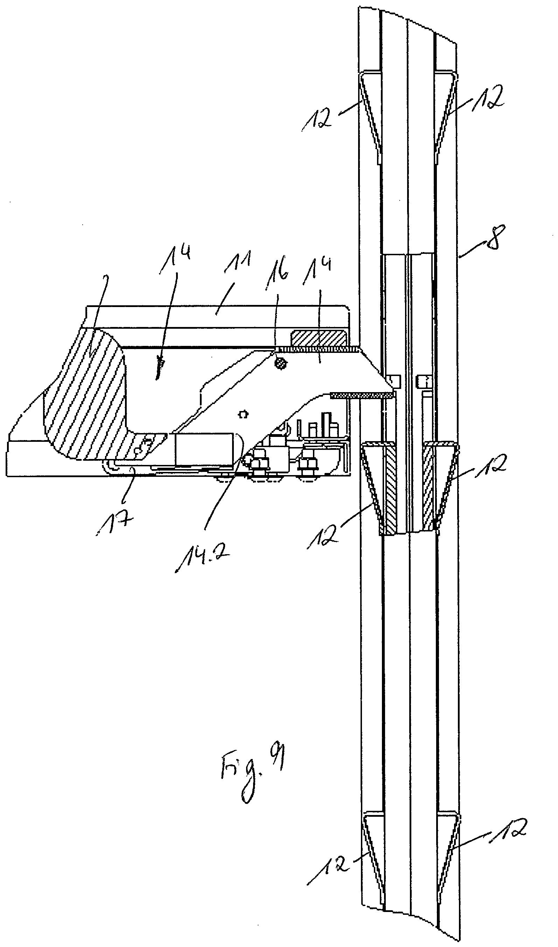

In der Position des Stützauslegers 14 während des Hochfahrens und während des Abstützens ist er frei um die Schwenkachse 16 verschwenkbar. Der zusätzlich noch vorgesehene Schwenkriegel 17, der nachfolgend näher beschrieben werden wird, ist in einer Position innerhalb des Segmentbodens gelegen, in der er den Stützhebel 14 nicht verriegelt. Dieser wird nun wirksam, wenn der Segmentboden 11 aus einer Position, wie sie in Fig. 8 dargestellt ist, also aus der Stützbetriebsstellung des Stützauslegers 14 nunmehr abgesenkt werden soll, so dass der Stützhebel 14 an dem ortsfesten Stützabsatz 12 der Runge 8 vorbeibewegt werden muss. Dies ist in den Fig. 9 bis 15 dargestellt.

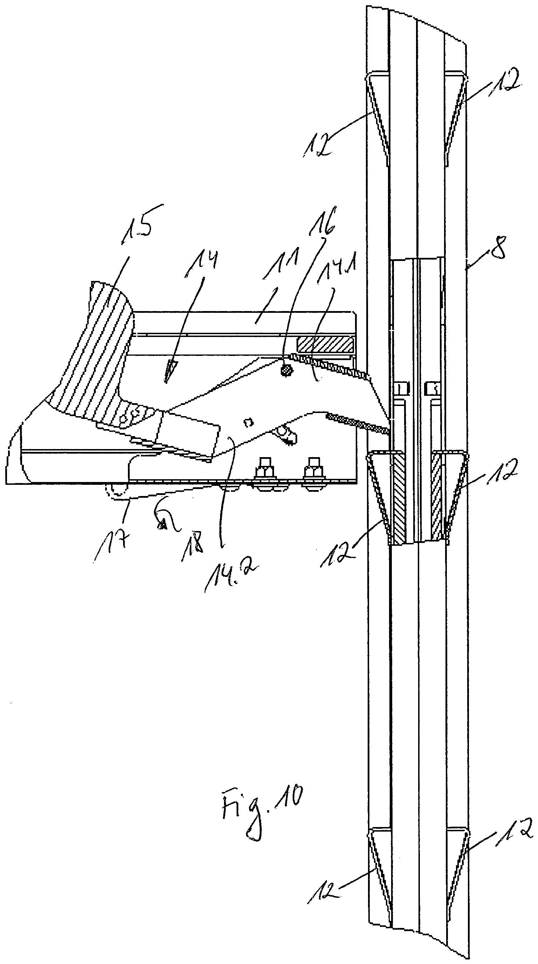

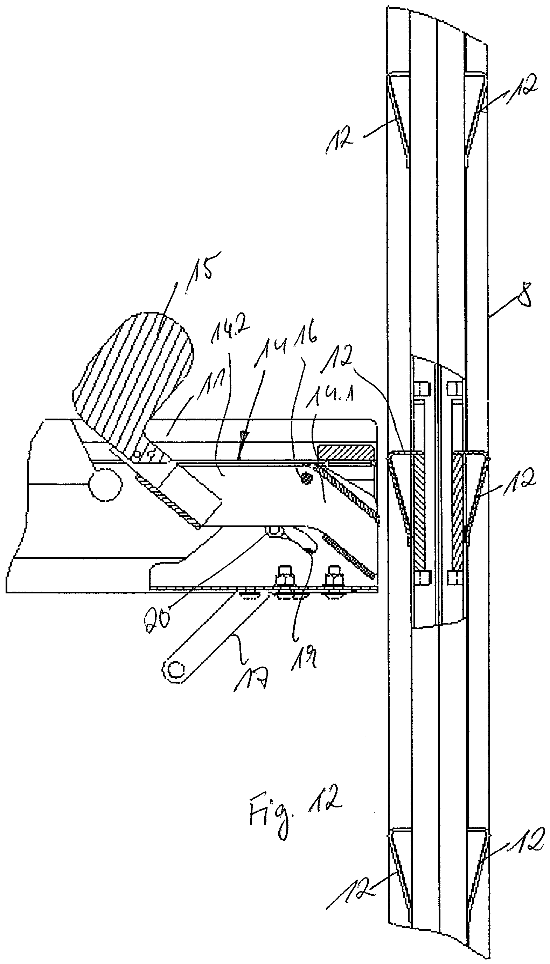

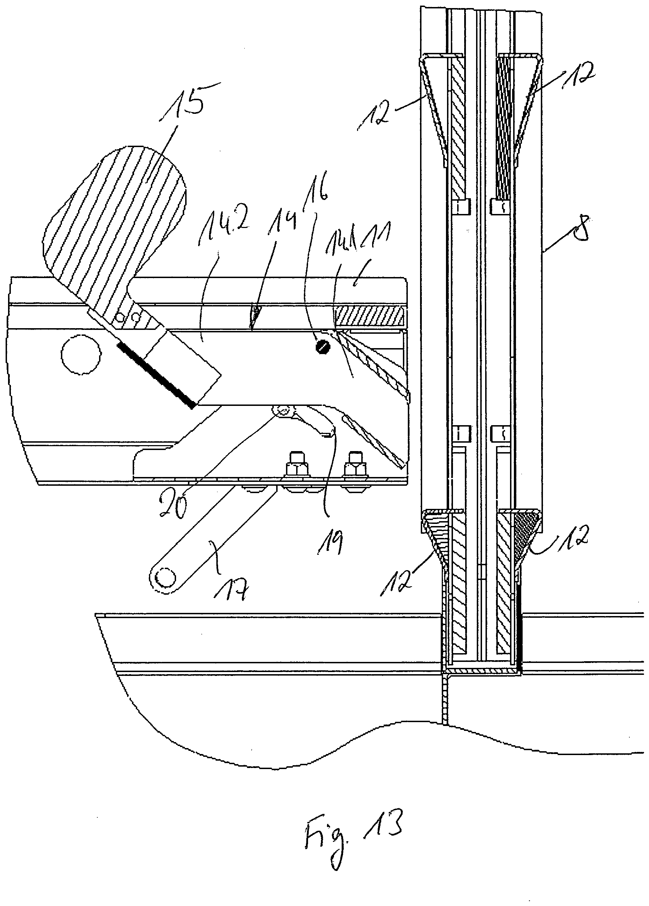

Der Stützausleger 14 ist aus der in der Zeichnung dargestellten mittleren Position des dortigen Stützabsatzes 12 in die darunter gelegene Stützposition an dem darunter gelegenen Stützabsatz 12 zu bewegen. Dazu wird zunächst ein Segmentboden 11 angehoben. Dies zeigt Fig. 9. Der Stützausleger 14 ist in seiner im wesentlichen horizontalen Lage (infolge Eigengewicht) verblieben. Der Verriegelungshebel 17 liegt ebenfalls noch innerhalb des Segmentbodens 11. Nun wird der Verriegelungshebel 17 gegen den Uhrzeigersinn 18 (Fig. 10) durch die Bedienperson aus dem Segmentboden 11 herausbewegt. Dazu kann der Segmentboden 11 auch noch angehoben werden. Der Verriegelungshebel 17 ist in einer Kulissenführung 19 mit endseitigen Anschlägen über ein Führungselement 20 geführt, so dass der Stützausleger 14 mit seinem Bereich 14.1 ebenfalls durch die Verriegelungshebel 17 um die Schwenkachse 16 derart verschwenkt wird, dass die Enden des Bereiches 14.1 des Stützauslegers 14 aus der Position gemäß Fig. 10 einwärts, d.h. in den Segmentboden 11 bzw. in Richtung auf den Segmentboden 11 verschwenkt werden, so dass sie über den Segmentboden 11 nicht mehr hervorstehen bzw. so nahe an ihn einwärts verschwenkt wird, dass die Enden des Bereiches 14.1 des Stützauslegers 14 die äußeren Kanten der Stützansätze 12 der Runge 8 passieren können. Danach kann der Segmentboden 11 abwärts bewegt werden gemäß den Darstellungen nach den Fig. 12 und 13. Der Fahnenbereich 15 ist dabei im Übrigen aus dem Segmentboden 11 herausbewegt, so dass die Bedienperson weiss, dass der Segmentboden 11 sich nicht in seiner Abstützstellung befindet und die Absenkbewegung durchgeführt werden kann.

Gelangt der Stützausleger 14 in den Bereich der gewünschten Höhe, d.h. in den Bereich des daruntergelegenen Stützansatzes 12, kann der Riegel 17 manuell wieder in den Segmentboden eingeschoben werden, was unmittelbar eine Entriegelung des Stützauslegers 14 und eine freie Verschwenkbarkeit des Stützauslegers 14 zur Folge hat mit dem Ergebnis, dass der Bereich 14.1 des Stützauflegers 14 auf die Stützfläche des Stützansatzes 12 gelangt und wiederum die Stützbetriebsstellung einnehmen kann, wie sie in Fig. 15 nach einem Absenkvorgang dargestellt ist. Ist dies ein unterer Bereich im Bereich des Laderaumbodens 6, erfolgt diese Entriegelung des Stützauslegers 14 automatisch, indem infolge der Absenkbewegung bei Auftreffen des Verriegelungshebels 17 auf den Laderaumboden 6 die Entriegelung des Stützauslegers 14 automatisch durchgeführt wird.

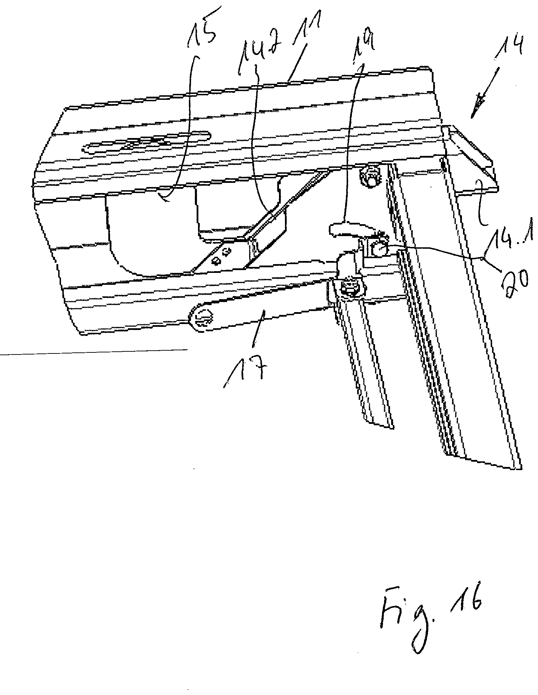

In den Fig. 16 bis 19 ist der Segmentboden 11 in perspektivischen Darstellungen vergrößert und vereinzelt dargestellt, mit Darstellung des Verriegelungshebels 17 für den Stützausleger 14. In der Darstellung nach Fig. 16 befindet sich der Stützausleger 14 in seiner Verriegelungsposition. Der Verriegelungshebel 17 ist innerhalb des Segmentbodens 11 in einer entriegelten Position gelegen. Der Endbereich 14.1 ist im wesentlichen waagerecht und damit horizontal ausgerichtet und der Signalfahnenbereich 15 innerhalb des Segmentbodens gelegen.

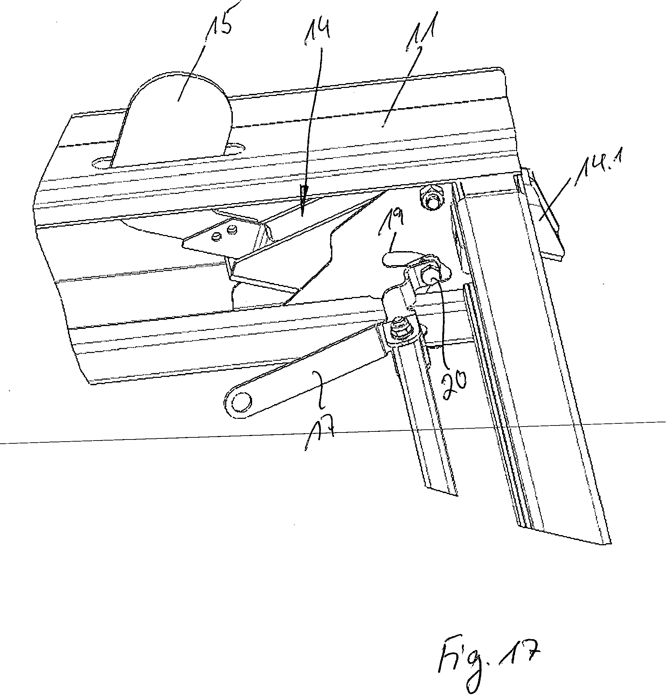

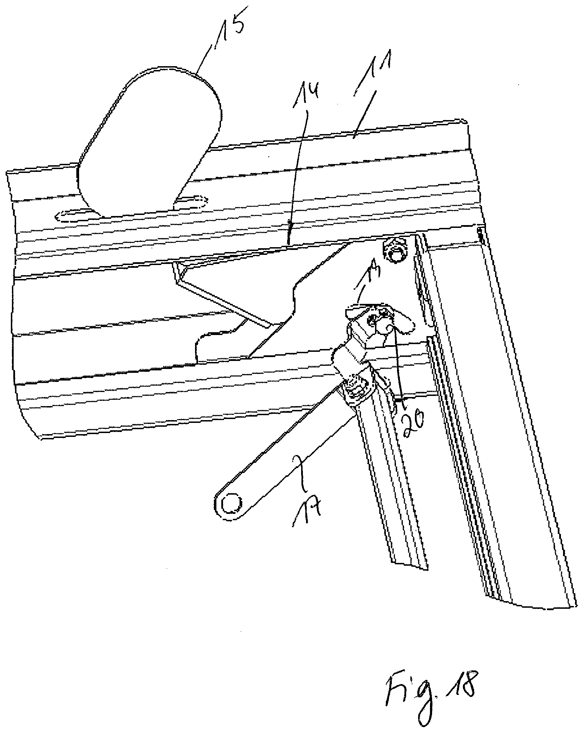

In der Darstellung nach Fig. 17 ist der Verriegelungshebel 17 zu Beginn seiner Verriegelungsbewegung gezeigt, so dass der Signalfahnenbereich 15 mitsamt dem Stützausleger 14 schon leicht verschwenkt ist, wie dies die Position des Elementes 20 in der Kulissenführung 19 zeigt. Fig. 18 zeigt eine weitere Position während dieser Verriegelungsbewegung des Verriegelungshebels 17.

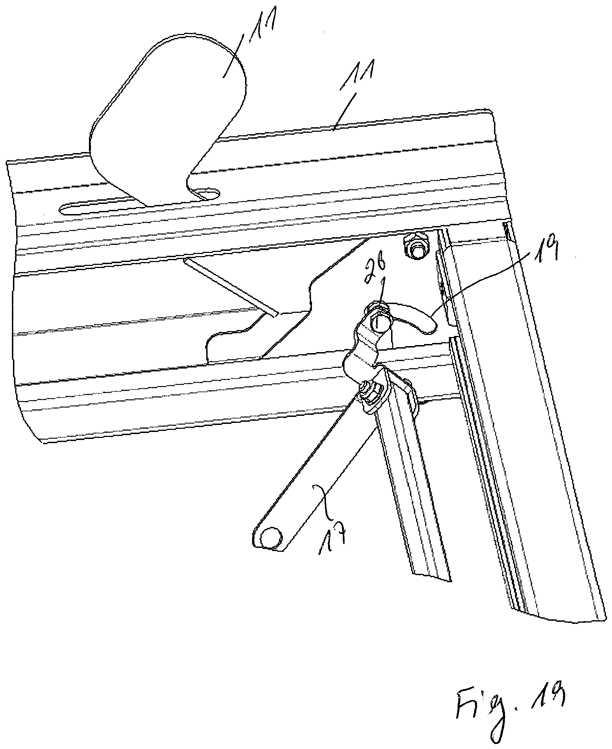

In Fig. 19 hat der Verriegelungshebel 17 seine Verriegelungsendstellung innerhalb der Kulissenführung 19 eingenommen. Der Stützausleger 14 mit seinem Endbereich 14.1 ist innerhalb des Segmentbodens 11 gelegen. Lediglich der Signalfahnenbereich 15 steht voll über die Fläche des Segmentbodens 11 hervor und zeigt dem Benutzer, dass die Verriegelungsstellung des Stützauslegers 14 eingenommen ist und mithin eine Absenkbewegung des Segmentbodens 11 vorgenommen werden kann.

## Patentansprüche

1. Fahrzeugaufbau (1) für Nutzfahrzeuge mit einem auf einem Fahrgestell (2) gehalterten Laderaumboden (6) sowie mit Eck- (9) und Seitenrungen (8), die mit einem Fahrzeugdach verbunden sind und von denen zumindest ein Rungenteil mit in unterschiedlichen Höhen angeordneten Stützansätzen (12) versehen ist zur Halterung eines Stützauslegers (14) eines zusätzlich zum Laderaumboden (6) vorzusehenden Segmentbodens (11) zur Aufnahme von Transportgut, wobei ein Stützausleger (14) derart beweglich in oder am Segmentboden (11) befestigt ist, dass er in seiner Stützbetriebsstellung eine dem zugeordneten Stützansatz (12) zugewandte Seitenkante des Segmentbodens (11) überragt und in einer nicht abstützenden Außerbetriebsstellung in einen Bereich der Flächenerstreckung des Segmentbodens (11) überführbar ist, in der er die dem Stützansatz (12) zugewandte Seitenkante des Segmentbodens (11) nicht oder nicht wesentlich überragt, wobei der Stützausleger (14) um eine Schwenkachse (16) schwenkbar in oder am Segmentboden (11) befestigt ist, wobei der Stützausleger (14) mit einer Schwenkachse (16) versehen ist, aufgrund deren Lage der Stützausleger (14) in einer nicht verriegelten Stellung infolge von Eigengewicht in eine innerhalb des Segmentbodens (11) gelegene Betriebsstellung fällt, in der ein Bereich (14.1) des Stützauslegers (14) die Seitenkante des Segmentbodens (1) überragt, **dadurch gekennzeichnet, dass** die Position des Stützauslegers (14) durch eine Anzeigevorrichtung angezeigt ist, wobei der Stützausleger (14) mit einem Signalfahnenbereich (15) ausgebildet ist, der anzeigt, ob sich der Stützausleger (14) in seiner abstützenden Betriebsstellung oder sich in einer nicht-abstützenden Außerbetriebsstellung befindet.

2. Fahrzeugaufbau nach Anspruch 1, **dadurch gekennzeichnet, dass** der Stützausleger (14) in seiner nicht abstützenden Außerbetriebsstellung einwärts verschwenkbar ist.

3. Fahrzeugaufbau nach Anspruch 2, **dadurch gekennzeichnet, dass** der Stützausleger (14) in seiner einwärts verschwenkten nicht abstützenden Außerbetriebsstellung mechanisch verriegelbar ist.

4. Fahrzeugaufbau nach Anspruch 2 oder 3, **dadurch gekennzeichnet, dass** der Stützausleger (14) in seiner einwärts verschwenkten, nicht abstützenden Außerbetriebsstellung mechanisch verriegelbar und in einer von der einwärts verschwenkten Außerbetriebsstellung anderen Schwenkstellung frei um seine Schwenkachse (16) schwenkbar ist.

5. Fahrzeugaufbau nach einem der Ansprüche 2 bis 4, **dadurch gekennzeichnet, dass** der Stützausleger (14) als Schwenkriegel mit abgewinkelten Riegelbereichen (14.1, 14.2) ausgebildet ist.

6. Fahrzeugaufbau nach einem der Ansprüche 1 bis 5, **dadurch gekennzeichnet, dass** der Stützausleger (14) in eine den Segmentboden (19) abstützende Betriebsstellung überführbar ist, in der er innerhalb des Segmentbodens (11)gelegen ist.

7. Fahrzeugaufbau nach einem der Ansprüche 1 bis 6, **dadurch gekennzeichnet, dass** der Signalfahnenbereich (15) in der den Segmentboden (11) abstützenden Betriebsstellung innerhalb des Segmentbodens (11) gelegen ist und in der den Segmentboden nicht abstützenden Außerbetriebsstellung außerhalb des Segmentbodens in einer für eine Bedienperson sichtbaren Außerbetriebsstellung gelegen ist.

8. Fahrzeugaufbau nach einem der Ansprüche 1 bis 7, **dadurch gekennzeichnet, dass** der an einer Runge (8, 9) vorgesehene Stützansatz (12) eine sich zum Fahrzeugdach hin ausgerichtete erweiternde Gestaltung aufweist.

9. Fahrzeugaufbau nach einem der Ansprüche 1 bis 8, **dadurch gekennzeichnet, dass** zur Verriegelung des Stützauslegers (14) ein Verriegelungshebel (17) vorgesehen ist, der den Segmentboden (14) in seiner den Stützausleger (14) nicht verriegelnden Stellung an seiner dem Laderaumboden (6) zugewandten Unterseite überragt.

10. Fahrzeugaufbau nach Anspruch 9, **dadurch gekennzeichnet, dass** der Verriegelungshebel (17) bei Auftreffen auf den Laderaumboden (6) automatisch in seine den Stützausleger (14) freigebende Entriegelungsposition überführbar ist.

11. Fahrzeugaufbau nach einem der Ansprüche 9 der 10, **dadurch gekennzeichnet,** dass der Verriegelungshebel (17) in einer Führungskulisse (19) mit endseitigen Anschlägen geführt ist.

12. Fahrzeugaufbau nach einem der Ansprüche 1 bis 11, **dadurch gekennzeichnet, dass** die Eckrungen (9) und die Seitenrungen (8) höhenverstellbar ausgebildet sind.

13. Fahrzeugaufbau nach einem der Ansprüche 1 bis 12, **dadurch gekennzeichnet, dass** das Fahrzeugdach an Rungenauslegern befestigt ist, die relativ zu den Stützansätzen (12) einer Runge (8,9) höhenbeweglich sind.

14. Fahrzeugaufbau nach einem der Ansprüche 1 bis 13, **dadurch gekennzeichnet, dass** eine Seitenrunge ortsfest und feststehend an dem Fahrgestell (2) abgestützt ist.

## Claims

1. Vehicle body (1) for commercial vehicles, comprising a cargo-space base (6) supported on a chassis (2), and comprising corner (9) and lateral stakes (8) which are connected to a vehicle roof and of which at least one stake part is provided with support attachments (12) arranged at different heights for supporting a support arm (14) of a segment base (11), to be provided in addition to the cargo-space base (6), for receiving cargo items, a support arm (14) being movably fastened in or on the segment base (11) such that, in its supporting operating position, said support arm protrudes beyond a side edge of the segment base (11) facing the associated support attachment (12) and, in a non-supporting inoperative position, can be transferred into a region of the surface extension of the segment base (11) in which it does not protrude or does not substantially protrude beyond the side edge of the segment base (11) facing the support attachment (12), the support arm (14) being fastened in or on the segment base (11) so as to be pivotable about a pivot axis (16), the support arm (14) being provided with a pivot axis (16), the location of which causes the support arm (14) to fall, owing to its own weight in an unlocked position, into an operating position within the segment base (11) in which a region (14.1) of the support arm (14) protrudes beyond the side edge of the segment base (1), **characterised in that** the position of the support arm (14) is indicated by a display device, the support arm (14) being formed having a signal flag region (15) which indicates whether the support arm (14) is in its supporting operating position or in a non-supporting inoperative position.

2. Vehicle body according to claim 1, **characterised in that** the support arm (14) can be pivoted inwards in its non-supporting inoperative position.

3. Vehicle body according to claim 2, **characterised in that** the support arm (14) is mechanically lockable in its inwardly pivoted non-supporting inoperative position.

4. Vehicle body according to either claim 2 or claim 3, **characterised in that** the support arm (14) is mechanically lockable in its inwardly pivoted non-supporting inoperative position and is freely pivotable about its pivot axis (16) in a pivot position that is different from the inwardly pivoted inoperative position.

5. Vehicle body according to any of claims 2 to 4, **characterised in that** the support arm (14) is designed as a pivot bolt having angled bolt regions (14.1, 14.2).

6. Vehicle body according to any of claims 1 to 5, **characterised in that** the support arm (14) can be transferred into an operating position supporting the segment base (19), in which position it is located within the segment base (11).

7. Vehicle body according to any of claims 1 to 6, **characterised in that** the signal flag region (15), in the operating position supporting the segment base (11), is within the segment base (11) and, in the inoperative position not supporting the segment base, is outside the segment base in an inoperative position that is visible to an operator.

8. Vehicle body according to any of claims 1 to 7, **characterised in that** the support attachment (12) provided on a stake (8, 9) has a widening design oriented towards the vehicle roof.

9. Vehicle body according to any of claims 1 to 8, **characterised in that** a locking lever (17) is provided for locking the support arm (14), which lever protrudes beyond the segment base (14), on the underside thereof facing the cargo-space base (6), in the position thereof that does not lock the support arm (14).

10. Vehicle body according to claim 9, **characterised in that** the locking lever (17) can, upon impact with the cargo-space base (6), automatically be transferred into its unlocking position releasing the support arm (14).

11. Vehicle body according to either claim 9 or claim 10, **characterised in that** the locking lever (17) is guided in a guide slot (19) having end stops.

12. Vehicle body according to any of claims 1 to 11, **characterised in that** the corner stakes (9) and the lateral stakes (8) are height-adjustable.

13. Vehicle body according to any of claims 1 to 12, **characterised in that** the vehicle roof is fastened to stake arms which are vertically movable relative to the support attachments (12) of a stake (8, 9).

14. Vehicle body according to any of claims 1 to 13, **characterised in that** a lateral stake is supported on the chassis (2) in a stationary and fixed manner.

## Revendications

1. Montage de véhicule (1) pour des véhicules utilitaires avec un fond d'espace de chargement (6) maintenu sur un châssis (2) ainsi qu'avec des ranchers d'angle (9) et des ranchers latéraux (8) qui sont raccordés à un toit de véhicule et dont au moins une partie de rancher est pourvue de saillies d'appui (12) agencées à différentes hauteurs pour le support d'un bras d'appui (14) d'un fond de segment (11) à prévoir outre le fond d'espace de chargement (6) pour la réception de marchandises de transport, dans lequel un bras d'appui (14) est fixé de manière mobile dans ou sur le fond de segment (11) de telle manière qu'il dépasse dans sa position de fonctionnement d'appui une arête latérale du fond de segment (11)tournée vers la saillie d'appui (12) associée et puisse être transféré dans une position hors fonctionnement de non-appui dans une zone de l'étendue de surface du fond de segment (11), dans laquelle il ne dépasse pas ou sensiblement pas l'arête latérale du fond de segment (11) tournée vers la saillie d'appui (12), dans laquelle le bras d'appui (14) est fixé de manière pivotante autour d'un axe de pivotement (16) dans ou sur le fond de segment (11), dans lequel le bras d'appui (14) est pourvu d'un axe de pivotement (16), en raison de la position duquel le bras d'appui (14) tombe dans une position non verrouillée suite au poids propre dans une position de fonctionnement placée à l'intérieur du fond de segment (11), dans laquelle une zone (14.1) du bras d'appui (14) dépasse l'arête latérale du fond de segment (1), **caractérisé en ce que** la position du bras d'appui (14) est affichée par un dispositif d'affichage, dans lequel le bras d'appui (14) est réalisé avec une zone de drapeau de signalement (15) qui affiche si le bras d'appui (14) se trouve dans sa position de fonctionnement d'appui ou dans une position hors fonctionnement de non-appui.

2. Montage de véhicule selon la revendication 1, **caractérisé en ce que** le bras d'appui (14) est pivotant dans sa position hors fonctionnement vers l'intérieur.

3. Montage de véhicule selon la revendication 2, **caractérisé en ce que** le bras d'appui (14) peut être verrouillé mécaniquement dans sa position hors fonctionnement de non-appui pivotée vers l'intérieur.

4. Montage de véhicule selon la revendication 2 ou 3, **caractérisé en ce que** le bras d'appui (14) peut être verrouillé mécaniquement dans sa position hors fonctionnement de non-appui, pivotée vers l'intérieur et peut être pivoté dans une autre position de pivotement que la position hors fonctionnement pivotée vers l'intérieur librement autour de son axe de pivotement (16).

5. Montage de véhicule selon l'une quelconque des revendications 2 à 4, **caractérisé en ce que** le bras d'appui (14) est réalisé comme verrou pivotant avec des zones de verrou coudées (14.1, 14.2).

6. Montage de véhicule selon l'une quelconque des revendications 1 à 5, **caractérisé en ce que** le bras d'appui (14) peut être transféré dans une position de fonctionnement d'appui du fond de segment (19) dans laquelle il est placé à l'intérieur du fond de segment (11).

7. Montage de véhicule selon l'une quelconque des revendications 1 à 6, **caractérisé en ce que** la zone de drapeau de signalement (15) est placée dans la position de fonctionnement d'appui de fond de segment (11) à l'intérieur du fond de segment (11) et dans la position hors fonctionnement n'appuyant pas le fond de segment en dehors du fond de segment est placée dans une position hors fonctionnement visible pour un opérateur.

8. Montage de véhicule selon l'une quelconque des revendications 1 à 7, **caractérisé en ce que** la saillie d'appui (12) prévue sur un rancher (8, 9) présente une conception s'élargissant en étant orientée vers le toit de véhicule.

9. Montage de véhicule selon l'une quelconque des revendications 1 à 8, **caractérisé en ce qu'**un levier de verrouillage (17) est prévu pour le verrouillage du bras d'appui (14), lequel dépasse le fond de segment (14) dans sa position ne verrouillant pas le bras d'appui (14) sur son côté inférieur tourné vers le fond d'espace de chargement (6).

10. Montage de véhicule selon la revendication 9, **caractérisé en ce que** le levier de verrouillage (17) peut être transféré lors de la rencontre sur le fond d'espace de chargement (6) automatiquement dans sa position de déverrouillage libérant le bras d'appui (14).

11. Montage de véhicule selon l'une quelconque des revendications 9 ou 10, **caractérisé en ce que** le levier de verrouillage (17) est guidé dans une coulisse de guidage (19) avec des butées côté extrémité.

12. Montage de véhicule selon l'une quelconque des revendications 1 à 11, **caractérisé en ce que** les ranchers d'angle (9) et les ranchers latéraux (8) sont réalisés de manière réglable en hauteur.

13. Montage de véhicule selon l'une quelconque des revendications 1 à 12, **caractérisé en ce que** le toit de véhicule est fixé aux bras de ranchers qui sont mobiles en hauteur par rapport aux saillies d'appui (12) d'un rancher (8,9).

14. Montage de véhicule selon l'une quelconque des revendications 1 à 13, **caractérisé en ce qu'**un rancher latéral est en appui de manière stationnaire et fixe sur le châssis (2).
